# EUROPEAN PATENT SPECIFICATION

(11) **EP 4 180 493 B1**
(45) Date of publication and mention of the grant of the patent: **11.09.2024**
(21) Application number: 21838105.1
(22) Date of filing: 07.07.2021
(51) Int. Cl.: C09J 153/00, C09J 7/38

(54) **ADHESIVE COMPOSITION AND USE OF SAME**
KLEBSTOFFZUSAMMENSETZUNG UND VERWENDUNG DAVON
COMPOSITION ADHÉSIVE ET SON UTILISATION

(30) Priority: 07.07.2020 JP 2020117311
(43) Date of publication of application: 17.05.2023
(73) Proprietor: MORESCO Corporation, Kobe-shi, Hyogo 650-0047 (JP)
(72) Inventor: TSUKUDA, Hideki, Kobe-shi, Hyogo 650-0047 (JP)
(74) Representative: Bittner, Thomas L.
(86) International application number: PCT/JP2021/025549
(87) International publication number: WO 2022/009913

(56) References cited:
- EP-A1- 2 578 655
- WO-A1-2008/038794
- WO-A1-2008/065982
- WO-A1-2019/111611
- JP-A- 2016 037 524
- JP-A- 2017 036 368
- JP-A- 2018 104 655
- JP-A- 2020 023 720

## Description

### Technical Field

The present invention relates to an adhesive composition and use of the same, in particular, to a pressure sensitive adhesive composition having excellent heat resistance and use of the same.

### Background

A protective film is applied to a member such as glass used for a liquid crystal member such as a touch panel or a TV in order to avoid scratches in a production process of a product including such a member. The production process includes a step performed in a high-temperature and high-humidity environment with a temperature of 85°C and a humidity of 85% RH. In such a high-temperature and high-humidity environment, there is a problem that the adhesion of the protective film increases and this increase in the adhesion causes generation of an adhesive residue upon peeling off the protective film from an adherend. Therefore, the protective film needs to have high heat resistance in order to avoid an adhesion increase and an adhesive residue after aging in the high-temperature and high-humidity environment. In addition, the protective film needs to have a hue of transparency, which is a performance requirement. A hot melt-type adhesive composition, which softens at high temperature, has adhesion that tends to easily increase at high temperature. Therefore, in the conventional techniques, a solvent-type adhesive composition has been mainly used in the aforementioned use (see, for example, JP 2018-104655). Note that an adhesive residue refers to a state in which an adhesive or some components of the adhesive remain(s) on an adherend and contaminate(s) the adherend.

However, an exit from the solvent types has progressed worldwide in recent years, and studies on the hot melt types have also been actively conducted in this market (for example, JP 2014-159526). EP2578655 discloses adhesive compositions for protective film and optical film, comprising acrylic diblock copolymers and acrylic triblock copolymers.

### Summary

### Technical Problem

In the conventional techniques as described above, a release agent is added for improvement in removability. However, the addition of the release agent causes the release agent to transfer and stick to many areas of the surface of the adherend after peeling and therefore causes the adherend to be contaminated. The conventional techniques are not satisfactory in this respect.

An object of an aspect of the present invention is to provide a hot melt-type adhesive composition that, while having transparency, brings about a reduction in contamination of an adherend caused by an adhesion increase, an adhesive residue on the adherend, and transferring and sticking of an additive to the adherend even after aging in a high-temperature and high-humidity environment.

### Solution to Problem

In order for the above problems to be solved, an adhesive composition in accordance with an embodiment of the present invention is an adhesive composition including: an acrylic block copolymer; and a fluorine-based surfactant, the acrylic block copolymer having a triblock structure represented by [A1]-[B]-[A2], the [A1] and the [A2] each being a polymer block having a glass transition temperature higher than 40°C, the [B] being a polymer block having a glass transition temperature lower than 20°C, the fluorine-based surfactant having a weight average molecular weight of not less than 3,000, a ratio of fluorine atoms/carbon atoms, measured by X-ray photoelectron spectroscopy, on a surface of the adhesive composition that has been peeled off from an adherend after aging in a high-temperature and high-humidity environment being not less than 1.70 × 10⁻¹.

### Advantageous Effects of Invention

With an aspect of the present invention, it is possible to provide a hot melt-type pressure sensitive adhesive composition that, while having transparency, brings about a reduction in contamination of an adherend caused by an adhesion increase, an adhesive residue on the adherend, and transferring and sticking of an additive to the adherend even after aging in a high-temperature and high-humidity environment.

### Description of Embodiments

The following description will discuss embodiments of the present invention in detail. However, the present invention is not limited to such embodiments, but can be altered within this disclosure. The present invention also encompasses, in its technical scope, any embodiment derived by combining technical means disclosed in differing embodiments. Note that the expression "A to B" representing a numerical range means "not less than A and not more than B" unless otherwise specified herein. Further, the wording "(meth)acrylic" means both "acrylic" and "methacrylic", and the wording "(meth)acrylate" means both "acrylate" and "methacrylate".

### [1. Adhesive composition]

The inventors of the present invention studied to solve the above problems. As a result, the inventors found that adding a fluorine-based surfactant to a system in which a predetermined acrylic block copolymer is used makes it possible to (i) cause a fluorine-based surfactant to be present in a surface layer portion of an adhesive layer made of an adhesive composition in an amount not smaller than a predetermined amount and makes it possible to (ii) provide a hot melt-type adhesive composition that, while having transparency, brings about a reduction in contamination of an adherend caused by an adhesion increase, an adhesive residue on the adherend, and transferring and sticking of an additive to the adherend even after aging in a high-temperature and high-humidity environment with, for example, a temperature of 85°C and a humidity of 85% RH.

Specifically, an adhesive composition in accordance with an embodiment of the present invention is an adhesive composition including: an acrylic block copolymer; and a fluorine-based surfactant, the acrylic block copolymer having a triblock structure represented by [A1]-[B]-[A2]. The [A1] and the [A2] are each a polymer block having a glass transition temperature higher than 40°C, the [B] is a polymer block having a glass transition temperature lower than 20°C, and the fluorine-based surfactant has a weight average molecular weight of not less than 3,000, and a ratio of fluorine atoms/carbon atoms, measured by X-ray photoelectron spectroscopy, on a surface of the adhesive composition that has been peeled off from an adherend after aging in a high-temperature and high-humidity environment is not less than 1.70 × 10⁻¹.

### <1-1. Acrylic block copolymer>

In the present invention, the "acrylic block copolymer" is intended to mean a copolymer having a plurality of different polymer blocks, the plurality of different polymer blocks each being a polymer containing an alkyl (meth)acrylate monomer. The polymer containing the alkyl (meth)acrylate monomer needs to contain an alkyl (meth)acrylate monomer, and may contain a monomer other than the alkyl (meth)acrylate monomer. Alternatively, the polymer containing the alkyl (meth)acrylate monomer may be, for example, a polymer derived only from a plurality of types of alkyl (meth)acrylate monomers, or may be a homopolymer derived from a single alkyl (meth)acrylate monomer. In the following description, the "polymer block containing an alkyl (meth)acrylate monomer" is also referred to as "polymer block derived from alkyl (meth)acrylate" and as "acrylic polymer block".

The adhesive composition in accordance with an embodiment of the present invention includes an acrylic block copolymer having a triblock structure represented by [A1]-[B]-[A2]. The [A1] and [A2] are polymer blocks having a glass transition temperature higher than 40°C (hereinafter, a polymer block having a glass transition temperature higher than 40°C can be referred to as "hard block" in the present specification), and the [B] is a polymer block having a glass transition temperature lower than 20°C (hereinafter, a polymer block having a glass transition temperature lower than 20°C can be referred to as "soft block" in the present specification).

Note that the glass transition temperature (Tg) of a polymer block is intended to mean a value calculated from the FOX equation on the basis of the glass transition temperatures of the homopolymers of respective monomers that constitute the polymer block and the content ratios (weight fractions) of the monomers. As the glass transition temperatures of the homopolymers, glass transition points listed in "HANDBOOK OF PRESSURE SENSITIVE ADHESIVE TECHNOLOGY" from The Nikkan Kogyo Shimbun, Ltd. can be adopted, for example.

The alkyl (meth)acrylate monomer is more preferably an alkyl (meth)acrylate monomer that includes a C₁-C₁₂ alkyl group. The acrylic block copolymer having the triblock structure needs to have acrylic polymer blocks that are [A1], [B], and [A2], and may contain a polymer block other than the acrylic polymer blocks. However, the acrylic block copolymer is more preferably composed only of acrylic polymer blocks.

With the inclusion of the acrylic block copolymer having the triblock structure, it is possible to suitably disperse the fluorine-based surfactant. This makes it possible to cause the fluorine-based surfactant to be present in an amount not smaller than a predetermined amount in the surface layer portion of the adhesive layer made of the adhesive composition. It is possible to provide a hot melt-type adhesive composition that, while having transparency, brings about a reduction in contamination of an adherend caused by an adhesion increase, an adhesive residue on the adherend, and transferring and sticking of an additive to the adherend even after aging in a high-temperature and high-humidity environment with, for example, a temperature of 85°C and a humidity of 85% RH.

The hard block has a glass transition temperature that is more preferably 80°C to 140°C and even more preferably 100°C to 120°C. Further, the soft block has a glass transition temperature that is more preferably -100°C to -20°C and even more preferably -80°C to -40°C.

The [A1] and [A2] may be the same polymer block or different polymer blocks, provided that the polymer blocks have glass transition temperatures in the above-described range. Further, the [A1] and [A2] are not limited to any particular polymer blocks, provided that the polymer blocks have glass transition temperatures in the above-described range. However, the [A1] and [A2] are more preferably polymer blocks each derived from, for example, methyl methacrylate, ethyl methacrylate, or the like, or a combination thereof. Alternatively, the [A1] and [A2] may be homopolymers derived from methyl methacrylate, or homopolymers derived from ethyl methacrylate. Among these, the [A1] and [A2] are even more preferably homopolymers derived from methyl methacrylate, because methyl methacrylate is a hard block having a higher glass transition temperature.

The [B] is not limited to any particular polymer block, provided that the polymer block has a glass transition temperature in the above-described range. For example, the [B] is more preferably a polymer block derived from an alkyl (meth)acrylate that includes a C₂-C₁₂ alkyl group. The alkyl group may be linear or branched. Examples of the polymer block derived from an alkyl (meth)acrylate include: a polymer block derived from each of ethyl acrylate, n-propyl acrylate, isopropyl acrylate, n-butyl acrylate, isobutyl acrylate, s-butyl acrylate, t-butyl acrylate, pentyl acrylate, isopentyl acrylate, n-hexyl (meth)acrylate, 2-ethylhexyl acrylate, lauryl acrylate, isooctyl acrylate, decyl methyl acrylate, cyclohexyl acrylate, nonyl acrylate, n-octyl (meth)acry-late, n-decyl methacrylate, n-dodecyl methacrylate, n-tetradecyl methacrylate, isobornyl methacrylate, and the like; and a polymer block derived from a combination of at least one of these alkyl (meth)acrylates. Among these, the [B] is more preferably a polymer block derived from an alkyl acrylate that includes a C₂-C₁₂ alkyl group, because such a polymer block is a soft block having a lower glass transition temperature. Further, for example, the [B] is even more preferably a homopolymer derived from n-butyl acrylate or a homopolymer derived from 2-ethylhexyl acrylate.

The same alkyl (meth)acrylate monomer may be contained in both the hard block and the soft block. Further, the acrylic block copolymer may contain one or more other monomers different from an alkyl (meth)acrylate monomer in at least one of the hard block and the soft block, provided that the microphase separation structure between the hard block and the soft block is not hindered during solidification. Examples of the other monomers include a vinyl monomer. In the present specification, examples of the vinyl monomer include a vinyl ester, a vinyl ether, a styrene monomer, acrylonitrile, acrylic acid, and (meth)acrylamide.

It is preferable that, relative to the total amount of the acrylic block copolymer having the triblock structure, the proportion of the hard block be 7 wt% to 50 wt% and the proportion of the soft block be 50 wt% to 93 wt%. It is more preferable that, relative to the total amount of the acrylic block copolymer having the triblock structure, the proportion of the hard block be 15 wt% to 35 wt% and the proportion of the soft block be 65 wt% to 85 wt%. Use of the acrylic block copolymer containing the hard block in a proportion of not less than 7 wt% prevents the adhesive composition from becoming too soft and thus prevents a decrease in the cohesive force. This makes it possible to reduce the generation of an adhesive residue. Further, it is preferable to use the acrylic block copolymer containing the hard block in a proportion of not more than 50 wt%, because such use of the acrylic block copolymer containing the hard block in a proportion of not more than 50 wt% avoids making the adhesive composition hard and thus avoids causing the stick-slip phenomenon, and prevents the occurrence of troubles in production such as noise at the time of peeling, load on an adherend, and striped peeling marks, accordingly.

The adhesive composition in accordance with an embodiment of the present invention needs to contain at least one type of acrylic block copolymer having the triblock structure, and may contain two or more types of acrylic block copolymers having the triblock structure.

The acrylic block copolymer having the triblock structure has a weight average molecular weight that is preferably 10,000 to 400,000, more preferably 40,000 to 200,000, and even more preferably 40,000 to 120,000. Use of the acrylic block copolymer having an excessively small weight average molecular weight makes the adhesive composition too soft, and thus causes a decrease in the cohesive force of the adhesive composition. This could cause the generation of an adhesive residue. Use of the acrylic block copolymer having an excessively large weight average molecular weight causes the adhesive composition to have an excessively high melt viscosity. This makes it difficult to apply a coating of the adhesive composition. As used herein, the "weight average molecular weight" means a value in terms of polystyrene as determined by the gel permeation chromatography (GPC).

The acrylic block copolymer having the triblock structure is contained in an amount that is preferably 45 parts by weight to 90 parts by weight, more preferably 60 parts by weight to 85 parts by weight, and even more preferably 72 parts by weight to 82 parts by weight, relative to 100 parts by weight of the adhesive composition. When the acrylic block copolymer having the triblock structure is contained in an amount of not less than 45 parts by weight, the adhesive composition exhibits excellent cohesive force. This makes it possible to obtain an adhesive composition that causes few adhesive residue. Further, when the acrylic block copolymer having the triblock structure is contained in an amount of not more than 90 parts by weight, it is possible to reduce or prevent a change in the melt viscosity of the adhesive composition, and thus provide an adhesive having an excellent coating properties.

In addition to the acrylic block copolymer having the triblock structure, the adhesive composition in accordance with an embodiment of the present invention may further include an acrylic block copolymer having a diblock structure represented by [A]-[B], Here, the [A] is a polymer block having a glass transition temperature higher than 40°C, and is the same as the [A1], the [A2], and the hard block described above. Further, the [B] is a polymer block having a glass transition temperature lower than 20°C, and is the same as the [B] of the acrylic block copolymer having the triblock structure and the soft block described above.

The [A] of the acrylic block copolymer having the diblock structure may be a polymer block the same as or different from the [A1] and the [A2] of the acrylic block copolymer having the triblock structure. Further, the [B] of the acrylic block copolymer having the diblock structure may be a polymer block the same as or different from the [B] of the acrylic block copolymer having the triblock structure.

It is preferable that, relative to the total amount of the acrylic block copolymer having the diblock structure, the proportion of the hard block be 1 wt% to 50 wt% and the proportion of the soft block be 50 wt% to 99 wt%. It is more preferable that, relative to the total amount of the acrylic block copolymer having the diblock structure, the proportion of the hard block be 1 wt% to 20 wt% and the proportion of the soft block be 80 wt% to 99 wt%. With the proportion of the hard block set to 1 wt% to 20 wt%, it is possible to provide an adhesive composition which is not only capable of reducing or preventing a change, due to temperature, in the melt viscosity of the adhesive composition but also excellent in coating properties.

In a case where the adhesive composition in accordance with an embodiment of the present invention includes the acrylic block copolymer having the diblock structure, in addition to the acrylic block copolymer having the triblock structure, the proportion of the acrylic block copolymer having the diblock structure relative to 100 parts by weight of the entire acrylic block copolymer is preferably not more than 50 parts by weight and more preferably not more than 40 parts by weight. It is preferable that the proportion of the acrylic block copolymer having the diblock structure be not more than 50 parts by weight, because such a proportion does not cause a significant decrease in heat resistance of the adhesive composition or a decrease in cohesive force, and thus does not cause the generation of an adhesive residue.

### <1-2. Fluorine-based surfactant>

The adhesive composition in accordance with an embodiment of the present invention includes a fluorine-based surfactant. As used herein, the "fluorine-based surfactant" is a surfactant containing a fluorine atom in the molecule thereof. For the adhesive composition in accordance with an embodiment of the present invention, a fluorine-based surfactant is added to a system using the above-described acrylic block copolymer. This enables the fluorine-based surfactant to be unevenly distributed in an amount not smaller than a predetermined amount in the surface layer portion of the adhesive layer made of the adhesive composition, and thus makes it possible to provide a hot melt-type adhesive composition that, while having transparency, brings about a reduction in contamination of an adherend caused by an adhesion increase, an adhesive residue on the adherend, and transferring and sticking of an additive to the adherend even after aging in a high-temperature and high-humidity environment with, for example, a temperature of 85°C and a humidity of 85% RH.

The fluorine-based surfactant may be, for example, a surfactant in which at least one hydrogen atom in an alkyl chain has been replaced with a fluorine atom. The fluorine-based surfactant may be, for example, a surfactant having a perfluoro group. The fluorine-based surfactant has, for example, a hydrophilic portion and a hydrophobic portion. The hydrophobic portion of the fluorine-based surfactant may be, for example, a perfluoro group. In the present invention, the "perfluoro group" is, for example, a group in which all hydrogen atoms or most hydrogen atoms in a hydrocarbon have been each replaced with a fluorine atom. The perfluoro group may be, for example, a perfluoroalkyl group in which all hydrogen atoms or most hydrogen atoms in an alkyl group have been each replaced with a fluorine atom.

The fluorine-based surfactant has a weight average molecular weight that is preferably not less than 3000, more preferably not less than 10,000, and even more preferably not less than 20,000, in terms of polystyrene as determined by the gel permeation chromatography (GPC). It is preferable that the weight average molecular weight of the fluorine-based surfactant be not less than 3,000, because such a weight average molecular weight makes it possible to retain the fluorine-based surfactant in the surface layer portion of the adhesive layer made of the adhesive composition, and prevents contamination of an adherend, accordingly. The upper limit of the weight average molecular weight of the fluorine-based surfactant is preferably not more than 200,000. Further, when the weight average molecular weight of the fluorine-based surfactant falls within the above-described range, the fluorine-based surfactant has sufficiently high compatibility with the above acrylic block copolymers. As a result, the adhesive composition of the present invention is excellent in transparency as well.

According to an embodiment of the present invention, the fluorine-based surfactant is more preferably, for example, a surfactant containing a perfluoroalkyl group. Specific examples of the surfactant containing a perfluoroalkyl group include MEGAFACE (registered trademark) F-251, F-253, F-281, F-410, F-430, F-444, F-477, F-510, F-511, F-551, F-552, F-553, F-554, F-555, F-556, F-557, F-558, F-559, F-560, F-561, F-562, F-563, F-565, F-568, F-569, F-570, F-571, F-572 (manufactured by DIC Corporation); Surflon (registered trademark) S-611, S-651, S-386 (manufactured by AGC SEIMI CHEMICAL CO., LTD.); Ftergent (registered trademark) 610FM, 710FL, 710FM, 710FS, 730FL, 730LM (manufactured by NEOS COMPANY LIMITED). Each of these compounds may be used singly or two or more of these compounds may be mixed for use.

The fluorine-based surfactant is contained in an amount that is preferably 0.15 parts by weight to 10 parts by weight, more preferably 0.18 parts by weight to 5 parts by weight, and even more preferably 0.2 parts by weight to 1 part by weight, relative to 100 parts by weight of the adhesive composition. The fluorine-based surfactant being contained in an amount in the above range makes it possible to cause the fluorine-based surfactant to be unevenly distributed in an amount not smaller than a predetermined amount in the surface layer portion of the adhesive layer made of the adhesive composition. It is possible to provide a hot melt-type adhesive composition that brings about a reduction in contamination of an adherend caused by an adhesion increase, an adhesive residue on the adherend, and transferring and sticking of an additive to the adherend even after aging in a high-temperature and high-humidity environment with, for example, a temperature of 85°C and a humidity of 85% RH.

### <1-3. Plasticizer>

The adhesive composition in accordance with an embodiment of the present invention contains a plasticizer. With the inclusion of the plasticizer, the adhesive composition in accordance with an embodiment of the present invention exhibits an excellent coating properties.

The plasticizer has a weight average molecular weight that is preferably 250 to 10,000, and more preferably 400 to 8,000. It is preferable that the weight average molecular weight be not less than 250, because such a weight average molecular weight improves the cohesive force of the adhesive composition. Further, it is preferable that the weight average molecular weight be not more than 10,000, because such a weight average molecular weight does not cause a decrease in the melt viscosity and the coating properties of the adhesive composition. As used herein, the "weight average molecular weight" means a value in terms of polystyrene as determined by the gel permeation chromatography (GPC).

It is more preferable that the plasticizer have good compatibility with the acrylic block copolymer and a high polarity. Examples of the plasticizer include: a fatty acid and a derivative thereof; and an oil. Examples of the oil include vegetable oil, animal oil, ester oil, alcohol, alkenyl succinic anhydride, chlorinated paraffin, and derivatives thereof (including hardened oils). Examples of the vegetable oil include castor oil and castor hardened oil. Examples of the ester oil include a palm aliphatic ester, a phthalic acid ester, an adipic acid ester, a sebacic acid ester, and an azelaic acid ester. Examples of the alcohol include polyalkylene glycol such as polyethylene glycol and polypropylene glycol, and glycerine diacetomonolaurate.

Examples of the fatty acid and the derivative thereof can include: a dibasic acid ester-based plasticizer composed of an aromatic dicarboxylic acid such as phthalic acid, isophthalic acid, or terephthalic acid and a monoalcohol having an alkyl group having, for example, approximately 4 to 10 carbon atoms; and a dibasic acid ester-based plasticizer containing an aliphatic dicarboxylic acid such as succinic acid, glutaric acid, adipic acid, pimelic acid, suberic acid, azelaic acid, and sebacic acid and a monoalcohol having an alkyl group having, for example, approximately 4 to 10 carbon atoms. More specific examples of the fatty acid and the derivative thereof can include: phthalic acid esters such as di-n-butyl phthalate, di-n-octyl phthalate, bis (2-ethylhexyl) phthalate, di-n-decyl phthalate, and diisodecyl phthalate; adipic acid esters such as bis (2-ethylhexyl) adipate and di-n-octyl adipate; sebacic acid esters such as bis (2-ethylhexyl) sebacate and di-n-butyl sebacate; and an azelaic acid ester such as bis(2-ethylhexyl)azelate.

As the plasticizer, the following can also be used: (meth)acrylic polymers including acrylic plasticizers such as ARUFON (registered trademark) series manufactured by Toagosei Co., Ltd. (e.g., "ARUFON (registered trademark) UP-1000, weight average molecular weight: 3,000", "ARUFON (registered trademark) UP-1010, weight average molecular weight: 1,700", "ARUFON (registered trademark) UP-1020, weight average molecular weight: 2,000", "ARUFON (registered trademark) UP-1021, weight average molecular weight: 1,600", and "ARUFON (registered trademark) UP-1110, weight average molecular weight: 2500"; xylene resins such as NIKANOL (registered trademark) series (e.g., Y-50, Y-1000, LLL, LL, L, GH, and G) manufactured by Mitsubishi Gas Chemical Company Inc.; epoxy-modified vegetable oils such as epoxidized soybean oil and epoxidized linseed oil; phosphate esters such as trioctyl phosphate and triphenyl phosphate; a phosphite ester such as triphenyl phosphite; an ester oligomer such as a product of esterification of adipic acid and 1,3-butylene glycol; etc.

The plasticizer is contained in an amount that is preferably 0 parts by weight to 50 parts by weight, more preferably 5 parts by weight to 40 parts by weight, and even more preferably 10 parts by weight to 25 parts by weight, relative to 100 parts by weight of the adhesive composition. It is preferable that the plasticizer be contained in the adhesive composition, because this prevents the melt viscosity of the adhesive composition from becoming too high, and makes it possible to suitably apply a coating of the adhesive composition, accordingly. Further, it is preferable that not more than 50 parts by weight of the plasticizer be contained in the adhesive composition, because such a content makes it possible to reduce or prevent contamination of an adherend caused by generation of oil bleeding from the adhesive composition.

### <1-4. Ratio of fluorine atoms/carbon atoms, measured by X-ray photoelectron spectroscopy, on surface of adhesive composition>

According to the adhesive composition in accordance with an embodiment of the present invention, a ratio of fluorine atoms/carbon atoms, measured by X-ray photoelectron spectroscopy, on a surface of an adhesive composition that has been peeled off from an adherend after aging in a high-temperature and high-humidity environment is not less than 1.70 × 10⁻¹. Here, the ratio of fluorine atoms/carbon atoms, measured by X-ray photoelectron spectroscopy, on the surface of the adhesive composition that has been peeled off from an adherend after aging in a high-temperature and high-humidity environment is intended to mean a ratio of the fluorine atoms/carbon atoms on a surface of the adhesive layer after an adhesive sheet, the adhesive sheet having an adhesive layer made of the adhesive composition and having been applied to the adherend such that the adhesive layer is in contact with the adherend, is peeled off from the adherend after aging in a high-temperature and high-humidity environment with a temperature of 85°C and a humidity of 85% RH. Specifically, the ratio of fluorine atoms/carbon atoms can be measured by the method described in Examples.

X-ray photoelectron spectroscopy (XPS) is a technique for measuring the kinetic energy distribution of photoelectrons emitted by X-ray irradiation to obtain knowledge on the type, abundance, and chemical binding state of elements present on the surface of a sample (at a depth of approximately 10 nm). Therefore, elemental analysis of the surface layer portion (at a depth of approximately 10 nm) of the surface of the adhesive layer can be performed by X-ray photoelectron spectroscopy.

A ratio of fluorine atoms/carbon atoms, measured by X-ray photoelectron spectroscopy, on the surface of the adhesive composition that has been peeled off from the adherend after aging in a high-temperature and high-humidity environment is not less than 1.70 × 10⁻¹, and is more preferably not less than 1.90 × 10-'. The upper limit of the ratio is not limited to any particular value, but is preferably not more than 4.92 × 10-'.

When the ratio of fluorine atoms/carbon atoms, measured by X-ray photoelectron spectroscopy, on the surface of the adhesive composition that has been peeled off from the adherend after aging in a high-temperature and high-humidity environment is not less than 1.70 × 10⁻¹, it is possible to cause the fluorine-based surfactant to be unevenly distributed in a suitable amount in the surface layer portion of the adhesive layer made of the adhesive composition. It is therefore possible to provide a hot melt-type adhesive composition that brings about a reduction in contamination of an adherend caused by an adhesion increase, an adhesive residue on the adherend, and transferring and sticking of an additive to the adherend even after aging in a high-temperature and high-humidity environment with, for example, a temperature of 85°C and a humidity of 85% RH.

### <1-5. Ratio of fluorine atoms/carbon atoms, measured by X-ray photoelectron spectroscopy, on surface of adherend>

For the adhesive composition in accordance with an embodiment of the present invention, a ratio of fluorine atoms/carbon atoms, measured by X-ray photoelectron spectroscopy, on a surface of an adherend that has been peeled off from the adhesive composition after aging in a high-temperature and high-humidity environment is preferably not more than 0.15. The ratio of fluorine atoms/carbon atoms on the surface of the adherend being not more than 0.15 indicates that transferring and sticking of the fluorine-based surfactant to the adherend is reduced and contamination of the adherend caused by the transferring and sticking of the additive is reduced.

Here, the ratio of fluorine atoms/carbon atoms, measured by X-ray photoelectron spectroscopy, on the surface of the adherend that has been peeled off from the adhesive composition after aging in a high-temperature and high-humidity environment is intended to mean a ratio of fluorine atoms/carbon atoms on the surface of the adherend after an adhesive sheet, the adhesive sheet having an adhesive layer made of the adhesive composition and having been applied to the adherend such that the adhesive layer is in contact with the adherend, is peeled off from the adherend after aging in a high-temperature and high-humidity environment with a temperature of 85°C and a humidity of 85% RH. Specifically, the ratio of fluorine atoms/carbon atoms can be measured by the method described in Examples.

The ratio of fluorine atoms/carbon atoms, measured by X-ray photoelectron spectroscopy, on the surface of the adherend that has been peeled off from the adhesive composition after aging in a high-temperature and high-humidity environment is more preferably not more than 0.12, and even more preferably not more than 0.07. The lower limit of the ratio is not limited to any particular value, but is preferably not less than 0.04.

### <1-6. Other additives>

If necessary, the adhesive composition may further contain an additive other than the above-described components to the extent that the additive does not impair the effect of the present invention. Examples of such an additive include a tackifier, a stabilizer, a filler, a fluorescent agent, an antioxidant, an ultraviolet absorbing agent, and a colorant.

The tackifier may be a natural tackifier, a petroleum tackifier, or a combination thereof. Examples of the tackifier include rosin acid, a rosin ester, a hydrocarbon resin, a synthetic polyterpene resin, a natural terpene resin, and a hydrogenated product thereof, and a combination of a plurality of resins.

More specific examples of the tackifier include: derivatives of rosins and modified rosins including rosin alcohol, methyl esters of rosin, diethylene glycol esters of rosin, glycerol esters of rosin, and partially hydrogenated rosins, completely hydrogenated rosins, or polymerized rosins thereof, and pentaerythritol esters and partially hydrogenated rosins, completely hydrogenated rosins, or polymerized rosins thereof; natural resins commercially available under the trade names such as gum rosin, wood rosin, and tall oil rosin; modified rosins such as polymerized rosins and partially hydrogenated rosins; polyterpene resins such as α-pinene polymers, β-pinene polymers, and dipentene polymers; terpene modified products such as a terpene-phenol copolymer and an α-pinene-phenol copolymer; aliphatic petroleum resins; alicyclic petroleum resins; cyclopentadiene resins; aromatic petroleum resins; phenol-based resins; alkylphenol-acetylene resins; styrene-based resins; xylene-based resins; and coumarone-indene resins; a copolymer of vinyl toluene and α-methyl styrene.

The proportion of the tackifier is not limited to any particular value, but is preferably not more than 90 parts by weight and more preferably not more than 10 parts by weight, relative to 100 parts by weight of the adhesive composition.

Examples of the stabilizer include 1,3,5-trimethyl-2,4,6-tris(3,5-di-t-butyl-4-hydroxybenzyl)benzene, pentaerythrityl tetrakis-3-(3,5-di-t-butyl-4-hydroxyphenyl)propionate, pentaerythritol tetrakis(3-lauryl thiodipropionate), n-octadecyl-(3,5-di-t-butyl-4-hydroxyphenol)propionate, 4,4'-methylenebis(2,6-t-butylphenol), 4,4'-thiobis(6-t-butyl-o-cresol), 2,6-di-t-butylphenol, 6-(4-hydroxyphenoxy)-2,4-bis(n-octyl-thio)-1,3,5-triazine, di-n-octadecyl 3,5-di-t-butyl-4-hydroxybenzyl-phosphonate, 2-(n-octylthio)ethyl 3,5-di-t-butyl-4-hydroxy-benzoate, and sorbitol hexa[3-(3,5-di-t-butyl-4-hydroxyphenyl)-propionate].

Examples of the filler include talc, calcium carbonate, clay silica, mica, wollastonite, feldspar, aluminum silicate, alumina, hydrated alumina, glass microspheres, ceramic microspheres, thermoplastic microspheres, barite, and wood flour.

### <1-7. Transparency>

An adhesive sheet having an adhesive layer made of the adhesive composition in accordance with an embodiment of the present invention is required to have high transparency. The adhesive sheet prepared by applying, to a PET film (thickness: 50 µm; manufactured by NIPPA Co., Ltd.; haze value: 4.0%), a coating of the adhesive composition in accordance with an embodiment of the present invention with a coating thickness of 20 µm has a haze value whose upper limit is preferably 5.0%. With the haze value of not more than 5.0%, the adhesive composition is excellent in transparency. This makes it possible to increase visibility even when the adhesive composition is used for a purpose of confirming the state of an adherend through the adhesive composition formed into a thin film. The above haze value is more preferably not more than 4.8%, and even more preferably not more than 4.6%. The lower limit of the haze value is not limited to any particular value.

Note that the haze value is a value measured in accordance with JIS K 7105, at 23°C, and at 50% humidity. For example, HAZE METER NDH 5000 (manufactured by NIPPON DENSHOKU INDUSTRIES CO., LTD) can be used for measuring the haze value.

### <1-8. Method for producing adhesive composition>

A method for producing the adhesive composition in accordance with an embodiment of the present invention is not limited to any particular method. Examples of the method includes a method of mixing the above-described materials by heat kneading with use of a melting tank, a roll, a Banbury mixer, a kneader, an extruder, or the like.

### [2. Use of adhesive composition]

The adhesive sheet having an adhesive layer made of the adhesive composition in accordance with an embodiment of the present invention is also included in the present invention. The adhesive sheet in accordance with an embodiment of the present invention is made by, for example, forming the adhesive layer made of the adhesive composition in accordance with an embodiment of the present invention on one surface of a base material. Alternatively, the adhesive sheet can be made in the form of a single-sided adhesive sheet which has, formed on one surface of a base material, the adhesive layer made of the adhesive composition in accordance with an embodiment of the present invention and which is provided with a release sheet on a surface, opposite to the base material, of the adhesive layer.

Such an adhesive sheet can be made in the form of an adhesive sheet provided with a protective film serving as a base material, and can exhibit the effect of the present invention in a production process including a step performed in a high-temperature and high-humidity environment with a temperature of 85°C and a humidity of 85% RH. However, the adhesive sheet is not limited to an adhesive sheet provided with a protective film serving as a base material, and may be any adhesive sheet.

Alternatively, the adhesive sheet according to an embodiment of the present invention may be made by forming, for example, an adhesive layer made of the adhesive composition in accordance with an embodiment of the present invention on both surfaces of a base material. Alternatively, the adhesive sheet in accordance with an embodiment of the present invention may be formed as an adhesive sheet which has, formed on both surfaces of a base material, the adhesive layer made of the adhesive composition in accordance with an embodiment of the present invention and which is provided with release sheets on respective surfaces, opposite to the base material, of the adhesive layers.

Examples of the base material can include, but not limited to, a film made of polyethylene, polypropylene, polyethylene terephthalate, polybutylene terephthalate, polycarbonate, or the like.

Aspects of the present invention can also be expressed as follows:
An embodiment of the present invention encompasses the following configuration:
<1> An adhesive composition including: an acrylic block copolymer; and a fluorine-based surfactant, the acrylic block copolymer having a triblock structure represented by [A1]-[B]-[A2], the [A1] and the [A2] each being a polymer block having a glass transition temperature higher than 40°C, the [B] being a polymer block having a glass transition temperature lower than 20°C, the fluorine-based surfactant having a weight average molecular weight of not less than 3,000, a ratio of fluorine atoms/carbon atoms, measured by X-ray photoelectron spectroscopy, on a surface of the adhesive composition that has been peeled off from an adherend after aging in a high-temperature and high-humidity environment being not less than 1.70 × 10⁻¹.
<2> The adhesive composition described in <1> in which the [A1] and the [A2] are each a polymer block derived from methyl methacrylate, and the [B] is a polymer block derived from an alkyl acrylate that includes a C₂-C₁₂ alkyl group.
<3> The adhesive composition described in <1> or <2>, further including a plasticizer in an amount of not more than 50 parts by weight, relative to 100 parts by weight of the adhesive composition.
<4> The adhesive composition described in any of <1> to <3>, further including an acrylic block copolymer having a diblock structure represented by [A]-[B], the [A] being a polymer block having a glass transition temperature higher than 40°C, the [B] being a polymer block having a glass transition temperature lower than 20°C.
<5> An adhesive sheet including an adhesive layer made of the adhesive composition described in any of <1> to <4>.
<6> The adhesive sheet described in <5> in which the adhesive sheet has a haze value of not more than 5.0%.

### Examples

The following description will discuss the present invention through Examples; however, the present invention is not limited to these Examples.

### [1. Preparation of adhesive composition]

### <Example 1>

A 101 parts adhesive composition was prepared by mixing, at 180°C in a heat kneader, 37 parts by weight of a triblock copolymer of poly(n-butyl acrylate) (PnBA) and polymethyl methacrylate (PMMA) (hereinafter referred to as PMMA-PnBA-PMMA) (KURARITY (registered trademark) LA3320, manufactured by Kuraray Co., Ltd.), 8 parts by weight of PMMA-PnBA-PMMA (KURARITY (registered trademark) LA2250, manufactured by Kuraray Co., Ltd.), 37 parts by weight of PMMA-PnBA-PMMA (KURARITY (registered trademark) LA2114, manufactured by Kuraray Co., Ltd.), 18 parts by weight of dioctyl sebacate (DOS, manufactured by HOKOKU CORPORATION), and 1 part by weight of the fluorine-based surfactant (MEGAFACE (registered trademark) F559, manufactured by DIC Corporation).

### <Example 2>

An adhesive composition was prepared in the same manner as in Example 1, except that the amount of the fluorine-based surfactant (MEGAFACE (registered trademark) F559) was changed to 0.6 parts by weight.

### <Example 3>

An adhesive composition was prepared in the same manner as in Example 1, except that the amount of the fluorine-based surfactant (MEGAFACE (registered trademark) F559) was changed to 0.3 parts by weight.

### <Example 4>

An adhesive composition was prepared in the same manner as in Example 1, except that the amount of the fluorine-based surfactant (MEGAFACE (registered trademark) F559) was changed to 0.2 parts by weight.

### <Comparative Example 1>

An adhesive composition was prepared in the same manner as in Example 1, except that the fluorine-based surfactant (MEGAFACE (registered trademark) F559) was not added.

### <Comparative Example 2>

An adhesive composition was prepared in the same manner as in Example 1, except that the amount of the fluorine-based surfactant (MEGAFACE (registered trademark) F559) was changed to 0.1 parts by weight.

### <Example 5>

An adhesive composition was prepared in the same manner as in Example 1, except that 0.3 parts by weight of MEGAFACE (registered trademark) F556 (manufactured by DIC Corporation) was added as the fluorine-based surfactant, instead of 1 part by weight of MEGAFACE (registered trademark) F559.

### <Example 6>

An adhesive composition was prepared in the same manner as in Example 1, except that 0.3 parts by weight of MEGAFACE (registered trademark) F562 (manufactured by DIC Corporation) was added as the fluorine-based surfactant, instead of 1 part by weight of MEGAFACE (registered trademark) F559.

### <Example 7>

An adhesive composition was prepared in the same manner as in Example 1, except that 0.3 parts by weight of MEGAFACE (registered trademark) F477 (manufactured by DIC Corporation) was added as the fluorine-based surfactant, instead of 1 part by weight of MEGAFACE (registered trademark) F559.

### <Example 8>

An adhesive composition was prepared in the same manner as in Example 1, except that 0.3 parts by weight of MEGAFACE (registered trademark) F565 (manufactured by DIC Corporation) was added as the fluorine-based surfactant, instead of 1 part by weight of MEGAFACE (registered trademark) F559.

### <Example 9>

An adhesive composition was prepared in the same manner as in Example 3, except that 18 parts by weight of dioctyl sebacate (DOS) was changed to 18 parts by weight of an acrylic polymer (ARUFON (registered trademark) UP1000, manufactured by Toagosei Co., Ltd.).

### <Example 10>

An adhesive composition was prepared in the same manner as in Example 3, except that 18 parts by weight of dioctyl sebacate(DOS) was changed to 18 parts by weight of a xylene resin (NIKANOL (registered trademark) L, manufactured by Mitsubishi Gas Chemical Company Inc.).

### <Example 11>

A 100.6 parts adhesive composition was prepared by mixing, at 180°C in a heat kneader, 30 parts by weight of PMMA-PnBA-PMMA (KURARITY (registered trademark) LA3320), 30 parts by weight of PMMA-PnBA-PMMA (KURARITY (registered trademark) LA2114), 40 parts by weight of dioctyl sebacate (DOS), and 0.6 parts by weight of the fluorine-based surfactant (MEGAFACE (registered trademark) F559).

### <Example 12>

A 100.6 parts by weight adhesive composition was prepared by mixing, at 180°C in a heat kneader, 30 parts by weight of PMMA-PnBA-PMMA (KURARITY (registered trademark) LA3320), 30 parts by weight of PMMA-PnBA-PMMA (KURARITY (registered trademark) LA2250, 30 parts by weight of PMMA-PnBA-PMMA (KURARITY (registered trademark) LA2114), 10 parts by weight of dioctyl sebacate (DOS), and 0.6 parts by weight of the fluorine-based surfactant (MEGAFACE (registered trademark) F559).

### <Example 13>

A 100.6 parts by weight adhesive composition was prepared by mixing, at 180°C in a heat kneader, 40 parts by weight of PMMA-PnBA-PMMA (KURARITY (registered trademark) LA3320), 37 parts by weight of PMMA-PnBA-PMMA (KURARITY (registered trademark) LA2114), 23 parts by weight of dioctyl sebacate (DOS), and 0.6 parts by weight of the fluorine-based surfactant (MEGAFACE (registered trademark) F559).

### <Example 14>

A 100.6 parts by weight adhesive composition was prepared by mixing, at 180°C in a heat kneader, 15 parts by weight of PMMA-PnBA-PMMA (KURARITY (registered trademark) LA3320), 67 parts by weight of PMMA-PnBA-PMMA (KURARITY (registered trademark) LA2114), 18 parts by weight of dioctyl sebacate (DOS), and 0.6 parts by weight of the fluorine-based surfactant (MEGAFACE (registered trademark) F559).

### <Example 15>

An adhesive composition was prepared in the same manner as in Example 2, except that 37 parts by weight of a diblock copolymer of PnBA and PMMA (hereinafter referred to as PnBA-PMMA) (KURARITY (registered trademark) LA1114, manufactured by Kuraray Co., Ltd.) was added instead of 37 parts by weight of PMMA-PnBA-PMMA (KURARITY (registered trademark) LA2114).

### <Comparative Example 3>

An adhesive composition was prepared in the same manner as in Example 2, except that 82.0 parts by weight of PnBA-PMMA (KURARITY (registered trademark) LA1114) was used as the acrylic block copolymer, instead of 37 parts by weight of PMMA-PnBA-PMMA (KURARITY (registered trademark) LA3320), 8 parts by weight of PMMA-PnBA-PMMA (KURARITY (registered trademark) LA2250), and 37 parts by weight of PMMA-PnBA-PMMA (KURARITY (registered trademark) LA2114).

### <Example 16>

An adhesive composition was prepared in the same manner as in Example 2, except that instead of 18 parts by weight of dioctyl sebacate (DOS), 13 parts by weight of dioctyl sebacate (DOS) was used and 5 parts by weight of the tackifier (Sylvalite RE-100L (manufactured by Kraton Polymers Japan Ltd.) was further added.

### <Example 17>

An adhesive composition was prepared in the same manner as in Example 2, except that instead of 18 parts by weight of dioctyl sebacate (DOS), 8 parts by weight of dioctyl sebacate (DOS) was used and10 parts by weight of the tackifier (Sylvalite RE-100L (manufactured by Kraton Polymers Japan Ltd.) was further added.

### <Comparative Example 4>

A 100.3 parts adhesive composition was prepared by mixing, at 180°C in a heat kneader, 82 parts by weight of PMMA-PnBA-PMMA (KURARITY (registered trademark) LA3320), 18 parts by weight of dioctyl sebacate (DOS), and 0.3 parts by weight of a fluorine-based lubricant (DEMNUM (registered trademark) SA-1, manufactured by Daikin Industries, Ltd.).

### <Comparative Example 5>

In an argon atmosphere, a mixture of t-butyl alcohol (41 g), 95 g of a perfluoropolyether represented by HO-CH₂CF₂CF₂O(CF₂CF₂CF₂O)nCF₂CF₂CH₂-OH (number average molecular weight: 1850), potassium t-butoxide (0.8 g), and glycidol (11 g) was stirred at 70°C for 14 hours. After that, the resultant mixture was washed with water and dehydrated, and then purified by silica gel column chromatography, so that 90 g of a fluorine-based surfactant A (number average molecular weight: 1936) having two surfactant hydroxyl groups at both ends thereof by reaction with glycidol was obtained. The fluorine-based surfactant A was a compound represented by the following Formula (1) in which n = 13.

HOCH₂CH(OH)CH₂OCH₂CF₂CF₂O(CF₂CF₂CF₂O₂)ₙCF₂CF₂CH₂OCH₂CH(OH)CH₂OH (1)

An adhesive composition was prepared in the same manner as in Comparative Example 4, except that 0.3 parts by weight of the fluorine-based surfactant A was added instead of 0.3 parts by weight of the fluorine-based surfactant (DEMNUM (registered trademark) SA-1 manufactured by Daikin Industries, Ltd.).

Tables 1 and 2 show the composition of each of the adhesive compositions prepared in Examples 1 to 17 and Comparative Examples 1 to 5. In Tables 1 and 2, the unit of numerical values indicating the composition are parts by weight.

**[Table 1]**

| | | | Example 1 | Example 2 | Example 3 | Example 4 | Compartartive Example 1 | Comparative Example 2 | Example 5 | Example 6 | Example 7 | Example 8 | Example 9 | Example 10 |
|---|---|---|---|---|---|---|---|---|---|---|---|---|---|---|
| Acrylic block copolymer | Triblock structure | LA3320 | 37.0 | 37.0 | 37.0 | 37.0 | 37.0 | 37.0 | 37.0 | 37.0 | 37.0 | 37.0 | 37.0 | 37.0 |
| | | LA2250 | 8.0 | 8.0 | 8.0 | 8.0 | 8.0 | 8.0 | 8.0 | 8.0 | 8.0 | 8.0 | 8.0 | 8.0 |
| | | LA2114 | 37.0 | 37.0 | 37.0 | 37.0 | 37.0 | 37.0 | 37.0 | 37.0 | 37.0 | 37.0 | 37.0 | 37.0 |
| | Diblock structure | LA1114 | | | | | | | | | | | | |
| Plasticizer | Dioctyl sebacate | DOS | 18.0 | 18.0 | 18.0 | 18.0 | 18.0 | 18.0 | 18.0 | 18.0 | 18.0 | 18.0 | | |
| | Acrylic polymer | Arufon UP 1000 | | | | | | | | | | | 18.0 | |
| | Xylene resin | NIKANOL L | | | | | | | | | | | | 18.0 |
| Fluorine-based surfactant | | MEGAFACE F559 | 1.0 | 0.6 | 0.3 | 0.2 | | 0.1 | | | | | 0.3 | 0.3 |
| | | MEGAFACE F556 | | | | | | | 0.3 | | | | | |
| | | MEGAFACE F562 | | | | | | | | 0.3 | | | | |
| | | MEGAFACE F477 | | | | | | | | | 0.3 | | | |
| | | MEGAFACE F565 | | | | | | | | | | 0.3 | | |
| | | Surfactant A | | | | | | | | | | | | |
| Fluorine-based lubricant | | DEMNUM SA-1 | | | | | | | | | | | | |
| Tackifier | | Sylvalite RE-100L | | | | | | | | | | | | |
| Total | | | 101.0 | 100.6 | 100.3 | 100.2 | 100.0 | 100.1 | 100.3 | 100.3 | 100.3 | 100.3 | 100.3 | 100.3 |
| 180-degree peel strength test | | Peel strength (N/10mm) | 0.16 | 0.24 | 0.21 | 0.43 | 3.00 | 0.60 | 0.36 | 0.33 | 0.37 | 0.24 | 0.35 | 0.45 |
| | | Peel state | Interfacial peeling | Interfacial peeling | Interfacial peeling | Interfacial peeling | Cohesive failure | Interfacial peeling | Interfacial peeling | Interfacial peeling | Interfacial peeling | Interfacial peeling | Interfacial peeling | Interfacial peeling |
| Ratio of F atoms to C atoms on surface of adhesive composition (F/C) | | | 4.92×10⁻¹ | 4.39×10⁻¹ | 4.27×10⁻¹ | 3.66×10⁻¹ | 0 | 1.64×10⁻¹ | 1.91×10-1 | 1.98×10⁻¹ | 3.22×10⁻¹ | 1.94×10^{-:} | 3.88×10⁻¹ | 3.80×10⁻¹ |
| Ratio of F atoms to C atoms on surface of adherend (F/C) | | | 1.22×10⁻¹ | 6.97× 10⁻² | 5.20× 10⁻² | 4.23×10⁻² | 0 | 2.84×10⁻² | 8.63×10⁻³ | 4.29×10⁻³ | 2.98×10^{.2} | 8.23×10⁻² | 1.19×10⁻¹ | 7.43×10⁻² |
| Evaluation of transparency | | Haze value (%) | 4.6 | 4.6 | 4.6 | 4.5 | 4.6 | 4.6 | 4.5 | 4.5 | 4.5 | 4.2 | 4.5 | 4.6 |
| | | Evaluation | Good | Good | Good | Good | Good | Good | Good | Good | Good | Good | Good | Good |
| Overall evaluation | | | C | A | A | B | D | D | B | B | B | a | B | B |

**[Table 2]**

| | | | Example 11 | Example 12 | Example 13 | Example 14 | Example 15 | Comparative Example 3 | Example 16 | Example 17 | Comparative Example 4 | Comparative Example 5 |
|---|---|---|---|---|---|---|---|---|---|---|---|---|
| Acrylic block copolymer | Triblock structure | LA3320 | 30.0 | 30.0 | 40.0 | 15.0 | 37.0 | | 37.0 | 37.0 | 82.0 | 82.0 |
| | | LA2250 | | 30.0 | | | 8.0 | | 8.0 | 8.0 | | |
| | | LA2114 | 30.0 | 30.0 | 37.0 | 67.0 | | | 37.0 | 37.0 | | |
| | Diblock structure | LA1114 | | | | | 37.0 | 82.0 | | | | |
| Plasticizer | Dioctyl sebacate | DOS | 40.0 | 10.0 | 23.0 | 18.0 | 18.0 | 18.0 | 13.0 | 8.0 | 18.0 | 18.0 |
| | Acrylic polymer | Arufon UP1000 | | | | | | | | | | |
| | Xylene resin | NIKANOL L | | | | | | | | | | |
| Fluorine-based surfactant | | MEGAFACE F559 | 0.6 | 0.6 | 0.6 | 0.6 | 0.6 | 0.6 | 0.6 | 0.6 | | |
| | | MEGAFACE F556 | | | | | | | | | | |
| | | MEGAFACE F562 | | | | | | | | | | |
| | | MEGAFACE F4.77 | | | | | | | | | | |
| | | MEGAFACE F565 | | | | | | | | | | |
| | | Surfactant A | | | | | | | | | | 0.3 |
| Fluorine-based lubricant | | DEMNUM SA-1 | | | | | | | | | 0.3 | |
| Tackifier | | Sylvalite RE-100L | | | | | | | 5.0 | 10.0 | | |
| Total | | | 100.6 | 100.6 | 100.6 | 100.6 | 100.6 | 100.6 | 100.6 | 100.6 | 100..3 | 100.3 |
| 180-degree peel strength test | | Peel strength (N / 10mm) | 0.21 | 0.21 | 0.24 | 0.42 | 0.22 | 0.63 | 0.45 | 0.59 | 1.84 | 0.10 |
| | | Peel state | Interfacial peeling | Interfacial peeling | Interfacial peeling | Interfacial peeling | Interfacial peeling | Cohesive failure | Interfacial peeling | Interfacial peeling | Cohesive failure | Cohesive failure |
| Ratio of F atoms to C atoms on surface of adhesive composition (F/C) | | | 4.37×10⁻¹ | 4.31×10⁻¹ | 4.22×10⁻¹ | 4.31×10⁻¹ | 4.29×10⁻¹ | - | 4.25×10⁻¹ | 4.34×10⁻¹ | 1.98×10⁻¹ | 1.29 |
| Ratio of F atoms to C atoms on surface of adherend (F/C) | | | 7.21×10⁻² | 7.82×10⁻² | 8.41×10⁻² | 8.64×10⁻² | 7.42×10 ² | - | 6.91×10⁻² | 7.50×10⁻² | 0 | 1.53 |
| Evaluation of transparency | | Haze value (%) | 4.5 | 4.8 | 4.4 | 4.5 | 4.6 | 4.7 | 4.7 | 4.8 | 5.1 | 6.9 |
| | | Evaluation | Good | Good | Good | Good | Good | Good | Good | Good | Poor | Poor |
| Overall evaluation | | | B | B | B | B | B | D | B | C | D | D |

### [2. Molecular weight analysis of fluorine-based surfactant]

### <Measurement of weight average molecular weight (Mw)>

The weight average molecular weight (Mw) of the fluorine-based surfactant to be used was measured with use of a liquid chromatograph (LC-20AD) manufactured by Shimadzu Corporation. The measurement conditions are as follows.
Sample concentration: 0.2% by mass (THF solution)
Sample injection volume: 20 µl
Eluent: THF
Flow rate: 0.7 ml/min
Measurement temperature: 40°C
Column: Sample column; Shodex GPC KF-G4A (one column) + Shodex GPC KF - 803 L (three columns)
Detector: Differential refractometer (RI)

Note that the weight average molecular weight was determined in terms of polystyrene.

**[Table 3]**

| | Mw |
|---|---|
| MEGAFACE F477 | 14,577 |
| MEGAFACE F556 | 9,071 |
| MEGAFACE F559 | 38,248 |
| MEGAFACE F562 | 28,273 |
| MEGAFACE F565 | 3,155 |
| Surfactant A | 2,000 |
| DEMNUM SA-1 | 1,948 |

### [3. Evaluation test]

### <180-degree peel strength>

The adhesive composition was applied to a PET film (PET-50µ, manufactured by NIPPA Co., Ltd.) with a coating thickness of 20 µm with use of a slot coater (manufactured by SUNTOOL CORPORATION), so that an adhesive sheet was prepared.

From the adhesive sheet thus prepared, an adhesive sheet was cut out so as to be 100 mm long and 10 mm wide. The surface of the cut-out adhesive sheet on the adhesive layer-side was attached to a stainless steel SUS304 plate, applied to the plate under pressure by one reciprocation of a 2kg roller, and then aged for 72 hours in an environment with a temperature of 85°C and a humidity of 85%RH.

After the aging, the adhesive sheet having been applied under pressure to the SUS304 plate was left to stand still for 30 minutes in an environment with ordinary temperature (23°C), and peeled off in the direction of an angle of 180 degrees and at a peel speed of 300 mm/min, with use of "Autograph" (registered trademark) (AGS-J) manufactured by Shimadzu Corporation. The peel strength for each test piece width dimension (unit: N/10 mm) was calculated using a test force average (N/10 mm).

Further, the peeling state was visually observed and evaluated as described below. The results are shown in Tables 1 and 2. Interfacial peeling: Failure occurring at an interface between the adhesive layer and an adherend was defined as interfacial peeling.

Cohesive failure: Failure occurring inside the adhesive layer was defined as cohesive failure.

### <X-ray photoelectron spectroscopy>

The adhesive composition was applied to a PET film (PET-50µ, manufactured by NIPPA Co., Ltd.) with a coating thickness of 20 µm with use of a slot coater (manufactured by SUNTOOL CORPORATION), so that an adhesive sheet was prepared.

The surface of the prepared adhesive sheet on the adhesive layer-side was attached to an adherend (SUS304), applied to the adherend under pressure by one reciprocation of a 2kg roller, and then aged for 72 hours in an environment with a temperature of 85°C and a humidity of 85%RH.

After the aging, the adhesive sheet having been applied under pressure to the SUS304 plate was left to stand still for 30 minutes in an environment with ordinary temperature (23°C), and peeled off from the adherend. The adhesive sheet and the adherend were then each fixed on double-sided tape and subjected to composition analysis with use of a scanning X-ray photoelectron spectrometer (PHI X-tool, manufactured by ULVAC-PHI, INC.) under the following conditions:
X-ray source: monochromatic AlKα, beam diameter: 100 µmϕ, output: 25 W
Measurement: wide measurement (0 to 1,000 eV; data acquisition interval: 1 eV, Pass energy: 280 eV)

A ratio [F]/[C], determined by X-ray photoelectron spectroscopy, on the surface of the adhesive layer of the adhesive sheet and the [F]/[C] on the surface of the adherend were defined respectively as a ratio of fluorine atoms/carbon atoms on the surface of the adhesive composition having been peeled from the adherend after aging in a high-temperature and high-humidity environment (in the table, indicated as "ratio (F/C) of F atoms to C atoms on surface of adhesive composition") and as a ratio of fluorine atoms/carbon atoms on the surface of the adherend having been peeled off from the adhesive composition after aging in a high-temperature and high-humidity environment (in the table, indicated as "ratio (F/C) of F atoms to C atoms on surface of adherend").

For each of Comparative Examples 1, 4, and 5, in which cohesive failure was observed, there was a portion where the SUS304 plate was exposed, and the portion was measured. For Comparative Example 3, in which cohesive failure was observed, the measurement was not conducted because there was no exposed portion of the SUS304 plate in Comparative Example 3.

### <Evaluation of transparency>

The adhesive composition was applied to a PET film (thickness: 50 µ, manufactured by NIPPA Co., Ltd., haze value = 4.0%) with a coating thickness of 20 µm with use of a slot coater (manufactured by SUNTOOL CORPORATION), so that an adhesive sheet was prepared. The adhesive sheet thus obtained was cut into a size of 50 mm × 50 mm and attached to a glass plate.

The haze value of a laminate thus obtained was measured with use of a turbidity meter (HAZE METER NDH 5000, manufactured by NIPPON DENSHOKU INDUSTRIES CO., LTD) in accordance with JIS K 7105, at 23°C, and 50% humidity. Further, the haze value was evaluated in accordance with the following criteria: The results are shown in Tables 1 and 2.
Haze value of not more than 5.0%: Good
Haze value of more than 5.0%: Poor

### <Overall evaluation>

On the basis of the results of the above evaluation test, an overall evaluation was performed according to the following criteria: Specifically, evaluations of A to D were performed on each of three items that are peel strength, a ratio of F atoms to C atoms on the surface of the adherend, and a haze value. The worst evaluation of the 3 items was taken as the overall evaluation of the adhesive composition. The results are shown in Tables 1 and 2.
A: A peel strength is not less than 0.01 N/10 mm and less than 0.30 N/10 mm, a ratio of F atoms to C atoms on the surface of an adherend is not more than 0.07, and a haze value is not more than 4.6%.
B: A peel strength is not less than 0.30 N/10 mm and less than 0.50 N/10 mm, a ratio of F atoms to C atoms on the surface of an adherend is more than 0.07 and not more than 0.12, and a haze value is more than 4.6% and not more than 4.8%.
C: A peel strength is not less than 0.50 N/10 mm and less than 0.60 N/10 mm, a ratio of F atoms to C atoms on the surface of an adherend is more than 0.12 and not more than 0.15, and a haze value is more than 4.8% and not more than 5.0%.
D: A peel strength is not less than 0.60 N/10 mm, a ratio of F atoms to C atoms on the surface of an adherend is more than 0.15, and a haze value is more than 5.0%.

As is described in Examples 1 to 17 listed in Tables 1 and 2, it has been shown that adhesive compositions in Examples 1 to 17 have overall evaluations of A to C, exhibited high transparency with a haze value, measured by a turbidity meter, of less than 5.0%, and brought about a reduction in contamination of the adherend caused by an adhesion increase, an adhesive residue on the adherend, and transferring and sticking of the additive to the adherend even after aging in a high-temperature and high-humidity environment with a temperature of 85°C and a humidity of 85% RH, the adhesive compositions in Examples 1 to 17 each including: an acrylic block copolymer having a triblock structure represented by [A1]-[B]-[A2]; and a fluorine-based surfactant, the [A1] and the [A2] each being a polymer block having a glass transition temperature higher than 40°C, the [B] being a polymer block having a glass transition temperature lower than 20°C, the fluorine-based surfactant having a weight average molecular weight of not less than 3000, a ratio of fluorine atoms/carbon atoms, measured by X-ray photoelectron spectroscopy, on a surface of each of the adhesive compositions that have been peeled off from the adherend after aging in the high-temperature and high-humidity environment being not less than 1.70 × 10-'.

In contrast, for the adhesive composition in Comparative Example 1, which did not contain a fluorine-based surfactant, an adhesion increase and cohesive failure were caused and an adhesive residue on the adherend was observed, after aging in a high-temperature and high-humidity environment with a temperature of 85°C and a humidity of 85% RH. Further, for the adhesive composition in Comparative Example 2, which exhibited a ratio of fluorine atoms/carbon atoms, measured by X-ray photoelectron spectroscopy, on the surface of the adhesive composition that had been peeled off from the adherend after aging in a high-temperature and high-humidity environment of less than 1.70 × 10⁻¹, an adhesion increase was caused after aging in a high-temperature and high-humidity environment. For the adhesive composition in Comparative Example 3, which did not contain an acrylic block copolymer having the triblock structure and for the adhesive composition in Comparative Example 4, which contained the fluorine-based lubricant in place of the fluorine-based surfactant, cohesive failure was caused, an adhesive residue on the adherend was observed, and turbidity was observed, after aging in a high-temperature and high-humidity environment. For the adhesive composition in Comparative Example 5, in which the fluorine-based surfactant A was used, transferring and sticking of the fluorine-based surfactant A to the adherend was observed and turbidity was observed, after the aging in a high-temperature and high-humidity environment.

### Industrial Applicability

An adhesive composition in accordance with an embodiment of the present invention and an adhesive sheet including an adhesive layer made of the adhesive composition bring about a reduction in contamination of an adherend caused by an adhesion increase, an adhesive residue on the adherend, and transferring and sticking of an additive to the adherend even after aging in a high-temperature and high-humidity environment with a temperature of 85°C and a humidity of 85% RH. The adhesive composition is therefore suitably used as an adhesive layer of a protective film, etc. for use in production and transportation in a high-temperature and high-humidity environment.

## Claims

1. An adhesive composition comprising:
- an acrylic block copolymer; and
- a fluorine-based surfactant,
wherein the acrylic block copolymer has a triblock structure represented by [A1]-[B]-[A2],
and wherein the [A1] and the [A2] each being a polymer block having a glass transition temperature higher than 40 °C, the [B] being a polymer block having a glass transition temperature lower than 20 °C, the glass transition temperature of a polymer block being a value calculated from the FOX equation on the basis of glass transition temperatures of homopolymers of respective monomers that constitute the polymer block and the weight fractions of the monomers,
and wherein the fluorine-based surfactant has a weight average molecular weight of not less than 3,000, the weight average molecular weight being a value in terms of polystyrene as determined by gel permeation chromatography,
and wherein the ratio of fluorine atoms/carbon atoms, measured by X-ray photoelectron spectroscopy, on a surface of the adhesive composition that has been peeled off from an adherend after aging in a high-temperature and high-humidity environment is not less than 1.70 × 10⁻¹.

2. The adhesive composition according to claim 1, wherein the [A1] and the [A2] are each a polymer block derived from methyl methacrylate, and the [B] is a polymer block derived from an alkyl acrylate that includes a C₂-C₁₂ alkyl group.

3. The adhesive composition according to claim 1, further comprising a plasticizer in an amount of not more than 50 parts by weight, relative to 100 parts by weight of the adhesive composition.

4. The adhesive composition according to any one of claims 1 to 3, further comprising an acrylic block copolymer having a diblock structure represented by [A]-[B], the [A] being a polymer block having a glass transition temperature higher than 40 °C, the [B] being a polymer block having a glass transition temperature lower than 20 °C.

5. An adhesive sheet comprising an adhesive layer made of the adhesive composition according to any one of claims 1 to 4.

6. The adhesive sheet according to claim 5, wherein the adhesive sheet has a haze value of not more than 5.0 %, the haze value being a value measured in accordance with JIS K 7105, at 23 °C, and at 50 % humidity.

## Patentansprüche

1. Klebstoffzusammensetzung, umfassend:
- ein Acryl-Blockcopolymer; und
- ein fluorbasiertes Tensid,
wobei das Acryl-Blockcopolymer eine Dreiblockstruktur aufweist, die durch [A1]-[B]-[A2] dargestellt wird,
und wobei das [A1] und das [A2] jeweils ein Polymerblock sind, der eine Glasübergangstemperatur höher als 40 °C aufweist, das [B] ein Polymerblock ist, der eine Glasübergangstemperatur niedriger als 20 °C aufweist, wobei die Glasübergangstemperatur eines Polymerblocks ein Wert ist, der aus der FOX-Gleichung auf der Grundlage von Glasübergangstemperaturen von Homopolymeren der jeweiligen Monomeren, die den Polymerblock bilden, und den Gewichtsanteilen der Monomeren berechnet wird,
und wobei das fluorbasierte Tensid ein Gewichtsmittel des Molekulargewichts von nicht weniger als 3.000 aufweist, wobei das Gewichtsmittel des Molekulargewichts ein Wert bezüglich Polystyrol ist, wie bestimmt mittels Gelpermeationschromatographie,
und wobei das Verhältnis Fluoratome/Kohlenstoffatome, gemessen mittels Röntgenphotoelektronenspektroskopie, an einer Oberfläche der Klebstoffzusammensetzung, die nach dem Altern in einer Umgebung von hoher Temperatur und hoher Feuchtigkeit von einer Klebefläche abgezogen wurde, nicht kleiner als 1,70 × 10⁻¹ ist.

2. Klebstoffzusammensetzung nach Anspruch 1, wobei das [A1] und das [A2] jeweils ein Polymerblock sind, der von Methylmethacrylat abgeleitet ist, und das [B] ein Polymerblock ist, der von einem Alkylacrylat abgeleitet ist, das eine C₂- bis C₁₂-Alkylgruppe beinhaltet.

3. Klebstoffzusammensetzung nach Anspruch 1, ferner umfassend ein Plastifizierungsmittel in einer Menge von nicht mehr als 50 Gewichtsteilen, bezogen auf 100 Gewichtsteile der Klebstoffzusammensetzung.

4. Klebstoffzusammensetzung nach einem der Ansprüche 1 bis 3, ferner umfassend ein Acryl-Blockcopolymer, das eine Zweiblockstruktur aufweist, die durch [A]-[B] dargestellt wird, wobei das [A] ein Polymerblock ist, der eine Glasübergangstemperatur höher als 40 °C aufweist, das [B] ein Polymerblock ist, der eine Glasübergangstemperatur niedriger als 20 °C aufweist.

5. Klebefolie, aufweisend eine Klebeschicht, die aus der Klebstoffzusammensetzung nach einem der Ansprüche 1 bis 4 hergestellt ist.

6. Klebefolie nach Anspruch 5, wobei die Klebefolie einen Trübungswert von nicht mehr als 5,0 % aufweist, wobei der Trübungswert ein Wert ist, der gemäß JIS K 7105 bei 23 °C und 50 % Feuchtigkeit gemessen wird.

## Revendications

1. Composition adhésive comprenant :
- un copolymère à blocs acrylique ; et
- un agent tensioactif à base de fluor,
dans laquelle le copolymère à blocs acrylique a une structure en trois blocs représentée par [A1]-[B]-[A2], et dans laquelle
le [A1] et le [A2] étant chacun un bloc polymère ayant une température de transition vitreuse supérieure à 40 °C, le [B] étant un bloc polymère ayant une température de transition vitreuse inférieure à 20 °C, la température de transition vitreuse d'un bloc polymère étant une valeur calculée à partir de l'équation de FOX sur la base des températures de transition vitreuse des homopolymères des monomères respectifs qui constituent le bloc polymère et des fractions pondérales des monomères,
et dans laquelle l'agent tensioactif à base de fluor a un poids moléculaire moyen en poids d'au moins 3 000, le poids moléculaire moyen en poids étant une valeur en termes de polystyrène telle que déterminée par chromatographie par perméation de gel,
et dans laquelle le rapport atomes de fluor/atomes de carbone, mesuré par spectroscopie de photoélectrons X, sur une surface de la composition adhésive qui a été décollée d'un adhérent après vieillissement dans un environnement à haute température et à forte humidité n'est pas inférieur à 1,70 × 10⁻¹.

2. Composition adhésive selon la revendication 1, dans laquelle le [A1] et le [A2] sont chacun un bloc polymère dérivé du méthacrylate de méthyle, et le [B] est un bloc polymère dérivé d'un acrylate d'alkyle qui comprend un groupe alkyle en C₂-C₁₂.

3. Composition adhésive selon la revendication 1, comprenant en outre un plastifiant en une quantité d'au plus 50 parties en poids, par rapport à 100 parties en poids de la composition adhésive.

4. Composition adhésive selon l'une quelconque des revendications 1 à 3, comprenant en outre un copolymère bloc acrylique ayant une structure dibloc représentée par [A]-[B], le [A] étant un bloc polymère ayant une température de transition vitreuse supérieure à 40 °C, le [B] étant un bloc polymère ayant une température de transition vitreuse inférieure à 20 °C.

5. Feuille adhésive comprenant une couche adhésive constituée de la composition adhésive selon l'une quelconque des revendications 1 à 4.

6. Feuille adhésive selon la revendication 5, dans laquelle la feuille adhésive a une valeur de voile inférieure ou égale à 5,0 %, la valeur de voile étant une valeur mesurée selon la norme JIS K 7105, à 23 °C, et à 50 % d'humidité.
